# EUROPÄISCHE PATENTSCHRIFT

(11) **EP 1 206 892 B1**
(45) Veröffentlichungstag und Bekanntmachung des Hinweises auf die Patenterteilung: **23.04.2003**
(21) Anmeldenummer: 00963917.0
(22) Anmeldetag: 22.08.2000
(51) Int. Cl.: H04Q 7/38

(54) **VERFAHREN ZUM ZUWEISEN VON ÜBERTRAGUNGSRESSOURCEN DER AUFWÄRTSRICHTUNG EINER FUNKÜBERTRAGUNG**
METHOD FOR ALLOCATING TRANSMISSION RESOURCES OF THE UPLINK OF A RADIO TRANSMISSION
PROCEDE D'AFFECTATION DE RESSOURCES DE TRANSMISSION DE LA DIRECTION ASCENDANTE D'UNE TRANSMISSION RADIO

(30) Priorität: 27.08.1999 DE 19940753
(43) Veröffentlichungstag der Anmeldung: 22.05.2002
(73) Patentinhaber: SIEMENS AKTIENGESELLSCHAFT, 80333 München (DE)
(72) Erfinder: MENZEL, Christian, 82216 Maisach (DE)
(86) Internationale Anmeldenummer: DE0002859
(87) Internationale Veröffentlichungsnummer: WO01017304

(56) Entgegenhaltungen:
- EP-A- 0 765 096
- EP-A- 0 993 214

## Beschreibung

Die Erfindung betrifft ein Verfahren zum Zuweisen von Übertragungsressourcen der Aufwärtsrichtung von Teilnehmerstationen zu einer Basisstation eines Funk-Kommunikationssystems.

In Funk-Kommunikationssystemen werden Nachrichten (Sprache, Bildinformation oder andere Daten) über Übertragungskanäle mit Hilfe von elektromagnetischen Wellen (Funkschnittstelle) übertragen. Die Übertragung erfolgt sowohl in Abwärtsrichtung (downlink) von der Basisstation zu Teilnehmerstation, als auch in Aufwärtsrichtung (uplink) von der Teilnehmerstation zur Basisstation.

Aus DE 198 10 285.2 ist bekannt, daß zur Unterscheidung der Signalquellen und damit zur Auswertung der Signale als Frequenzmultiplex (FDMA), Zeitlagenmultiplex (TDMA) oder Codemultiplex (CDMA) bekannte Verfahren dienen, die auch miteinander kombiniert werden können. Eine Ausprägung des Zeitlagenmultiplex (TDMA) ist das TDD (time division duplex) Übertragungsverfahren, bei dem in einem gemeinsamen Frequenzband die Übertragung sowohl in Aufwärtsrichtung, d.h. von der Basisstation zur Teilnehmerstation, als auch in Abwärtsrichtung von der Teilnehmerstation zur Basisstation erfolgt.

Zur Übertragung von Daten zwischen zwei Kommunikationsendgeräten kann auf verbindungsorientierte Konzepte und Konzepte auf der Basis logischer Verbindungen zurückgegriffen werden. Bei verbindungsorientierten Datenübertragungen müssen während der gesamten Zeit der Datenübertragung Übertragungsressourcen zwischen den zwei Kommunikationsendgeräten bereitgestellt werden.

Bei der Datenübertragung über logische Verbindungen ist eine dauerhafte Bereitstellung von Übertragungsressourcen nicht nötig. Ein Beispiel für eine solche Datenübertragung ist die Paketdatenübertragung. Hier besteht während der Dauer der gesamten Datenübertragung eine logische Verbindung zwischen den zwei Teilnehmerstationen, jedoch werden Übertragungsressourcen nur während der eigentlichen Übertragungszeiten der Datenpakete bereitgestellt. Dieses Verfahren basiert darauf, daß die Daten in kurzen Datenpaketen, zwischen denen längere Pausen auftreten können, übermittelt werden. In den Pausen zwischen den Datenpaketen sind die Übertragungsressourcen für andere logische Verbindungen verfügbar. Bezogen auf eine logische Verbindung werden Übertragungsressourcen eingespart.

Das aus der deutschen Patentschrift DE 44 02 930 A1 bekannte Paketdatenübertragungsverfahren bietet sich insbesondere für Kommunikationssysteme mit begrenzten Übertragungsressourcen an. Es wurde jedoch für eine Übertragung von nicht-zeitkritischen Informationen entwickelt, bei dem Verzögerungszeiten der Übertragung der Informationen insbesondere in Aufwärtsrichtung nicht relevant sind. Die Basisstation in einem Kommunikationssystem kann auf netzseitig eintreffende zeitkritische Informationen durch eine entsprechende Einteilung der Übertragungsressourcen in Abwärtsrichtung reagieren. Für die Aufwärtsrichtung ist dies nicht möglich, da die Zuteilung der funktechnischen Ressourcen netzseitig durchgeführt wird. Insbesondere ist eine Abstimmung der Teilnehmerstationen untereinander nicht möglich, so daß Informationen nur mit sehr großen Verzögerungen übertragen werden können.

Aus der DE 197 34 935 ist ein Verfahren bekannt, bei dem eine Basisstation aufgrund einer Anforderung eine Zuteilung von Übertragungsressourcen in Aufwärtsrichtung an diese Teilnehmerstation vornimmt. Jedoch erfolgt die Anforderung durch die Teilnehmerstation mit einem Vielfachzugriff, der beispielsweise aus dem GSM-Mobilfunksystem bekannt ist. Aufgrund der aufwendigen Signalisierung und der Kollisionswahrscheinlichkeit des Vielfachzugriffs sind sehr lange Verzögerungszeiten in Kauf zu nehmen.

Aus der EP 0 765 096 A2 ist ein Verfahren zur Zuweisung von Übertragungsresourcen der Aufwärtsrichtung der Funkschnittstelle einer Teilnehmerstation zu einer Basisstation bekannt, wobei die Funkresourcen einen Signalisierungskanal mit mehreren Subkanälen enthalten, die von den Teilnehmerstationen zum wahlfreien Zugriff genutzt werden können. Die Teilnehmerstationen können für die Zugriffe auf den Signalisierungskanal in unterschiedliche Gruppen eingeteilt werden, um so die Wahrscheinlichkeit von Kollisionen zu vermeiden. Die Gruppeneinteilung erfolgt dabei durch die Basisstation nach veränderbaren Wahrscheinlichkeitsverteilungen, die aus Verkehrsbedingungen und nach Dienstgütekriterien bestimmt werden können.

Der Erfindung liegt die Aufgabe zu Grunde, ein verfanren zur Zuweisung von Übertragungsressourcen zur Informationsübertragung anzugeben, das zeitkritischen Anwendungen besser entspricht. Diese Aufgabe wird durch das Verfahren mit den Merkmalen des Patentanspruchs 1 gelöst. Vorteilhafte Weiterbildungen der Erfindung sind den Unteransprüchen zu entnehmen.

Im erfindungsgemäßen Verfahren zum Zuweisen von Übertragungsressourcen der Aufwärtsrichtung einer Funkschnittstelle von Teilnehmerstation (MS) zu einer Basisstation (BS) eines TD-CDMA Kommunkationssystems sind für die Funkschnittstelle mehrere Zeitschlitze in einem Rahmen zusammengefaßt. Die Übertragungsressourcen sind jeweils einer Teilnehmerstation zur Datenübertragung zuweisbar, wobei die Übertragungsressourcen durch ein Frequenzband, einen Spreizkode und einen Zeitschlitz definiert sind. Spreizkodes sind innerhalb eines CDMA-Systems auch als CDMA-Kodes bekannt.

Innerhalb des Rahmens enthält ein erster, durch die Übertragungsressourcen eines Zeitschlitzes gebildeter Signalisierungskanal mehrere Subkanäle. Die Subkanäle sind durch Spreizkode der Übertragungsressource und Sendezeitpunkt innerhalb des Zeitschlitzes definiert. Ein erster Teil der Subkanäle wird von den Teilnehmerstationen für einen wahlfreien Vielfachzugriff genutzt und zusätzlich wird ein zweiter Teil der Subkanäle Teilnehmerstationen zur Signalisierung innerhalb von logischen Verbindungen exklusiv zugewiesen.

Im Gegensatz zu den, vom wahlfreien Vielfachzugriff genutzten Subkanälen des ersten Teils, sind die Subkanäle des zweiten Teils Teilnehmerstationen exklusiv zugewiesen. Da im wahlfreien Vielfachzugriff mehrere Teilnehmerstationen gleichzeitig auf einen Subkanal des ersten Teils zugreifen können ist eine Kollision wahrscheinlich. Für exklusiv zugewiesene Sub-kanäle des zweiten Teils ist dagegen eine Kollision auszuschließen und somit wird die Verzögerung bis zur Nutzung der Übertragungsressourcen für zeitkritische Informationen in Aufwärtsrichtung wesentlich verringert.

Aufgrund der exklusiven Zuordnung ist eine zusätzliche Signalisierung in Abwärtsrichtung zur Bestätigung der Signalisierung der Teilnehmerstation, wie im wahlfreien Vielfachzugriff üblich, nicht nötig. In diesem Fall wartet die Teilnehmerstation keine Bestätigung ab, sondern beginnt sofort mit der Übertragung der zeitkritischen Informationen.

Um die Zuverlässigkeit der Signalisierung zu erhöhen ist eine zusätzliche Bestätigung vorteilhaft, wenn die Übertragungsbedingungen ein Risiko einer fehlerhaften Signalisierung bergen. In diesem Fall wartet die Teilnehmerstation eine Bestätigung durch die Basisstation vor der Übertragung der zeitkritischen Informationen ab.

Zur Signalisierung in logischen Verbindungen werden durch das erfindungsgemäße Verfahren nur geringe Ressourcen zur Signalisierung benötigt, so daß die Signalisierung bereits in wenigen Millisekunden erfolgt.

In einer vorteilhaften Ausgestaltung der Erfindung wird die Aufteilung der Subkanäle in den ersten und zweiten Teil durch die Basisstation konfiguriert und über einen allgemeinen Signalisierungskanal den Teilnehmerstationen signalisiert.

Im Gegensatz zu einer festen Aufteilung der Subkanäle läßt eine Konfiguration durch die Basisstation eine Anpassung an unterschiedliche Kriterien, beispielsweise an das Funkverkehrsaufkommen zu. So kann die Aufteilung anhand der Anzahl bestehender Verbindungen, der Anzahl der wahlfreien Vielfachzugriffe oder der Anzahl der logischen Verbindungen für eine Übertragung von zeitkritischen Informationen konfiguriert werden.

Vorteilhafterweise wird die Aufteilung zyklisch konfiguriert. Mit der zyklischen Konfiguration werden die zur Signalisierung der Konfiguration benötigten Ressourcen effektiver genutzt. Wird die Konfiguration nur beispielsweise alle 30 Sekunden zyklisch aktualisiert ist der Verbrauch der Ressourcen sehr gering.

Besonders vorteilhaft ist der zweite Teil der Subkanäle zu der kollisionsfreien Signalisierung von Anforderungen der Teilnehmerstation von Übertragungsressourcen für eine Übertragung von zeitkritischen Informationen vorgesehen.

Die Übertragung von zeitkritischen Informationen setzt eine geringe Verzögerung bis zur Nutzung von Übertragungsressourcen voraus. Für die Übertragung von Sprachinformationen darf die Verzögerung 100 Millisekunden nicht überschreiten. Um in Aufwärtsrichtung die Übertragungsressourcen effektiv zu nutzen, werden erfindungsgemäß während Pausen der Übertragung von zeitkritischen Informationen nicht-zeitkritische Informationen von weiteren Teilnehmerstationen in der selben Übertragungsressource übertragen.

Mit dem erfindungsgemäßen Verfahren wird garantiert, daß die Verzögerung bis zur Nutzung der Übertragungsressource für die Übertragung der zeitkritischen Informationen einen Maximalwert nicht überschreitet. Der Maximalwert liegt deutlich niedriger als der des wahlfreien Vielfachzugriffes und ist bei geeigneter Wahl weiterer Systemparameter (geringe Verschachtelungstiefe) kleiner als 40 Millisekunden.

Besonders vorteilhaft wird während der Pausen der von der Teilnehmerstation signalisierten Übertragung von zeitkritischen Informationen eine exklusive Zuweisung einer Übertragungsressource zur jeweiligen Teilnehmerstation temporär aufgehoben und in der Übertragungsressource werden nicht-zeitkritische Informationen von weiteren Teilnehmerstationen innerhalb einer logischen Verbindung zur Basisstation übertragen.

Die Pausen der Übertragung der zeitkritischen Informationen wird durch die Basisstation detektiert. Dabei werden vorteilhafterweise unterschiedliche Verfahren zur Detektion angewendet, die auch miteinander kombiniert werden können.

Erstens werden die Pausen detektiert, indem die Signalisierung im Subkanal des zweiten Teils ausgewertet wird. Der Subkanal ist der Teilnehmerstation, die zeitkritische Informationen überträgt, exklusiv zugewiesen. Wird von der Teilnehmerstation beispielsweise keine Signalisierung im Subkanal gesendet, gibt die Basisstation die verwendete Übertragungsressource für die Übertragung von nicht-zeitkritischen Informationen weiterer Teilnehmerstationen frei.

Zweitens werden die Pausen detektiert, indem eine Unterbrechung im Datenstrom ausgewertet wird. Ist die Übertragung der zeitkritischen Informationen unterbrochen, wird nach einem festen oder anhand von Übertragungsbedingungen oder der Funk-Verkehrslast konfigurierten Zeitintervall eine Pause festgestellt und die Basisstation gibt die verwendete Übertragungsressource für die Übertragung von nicht-zeitkritischen Informationen weiterer Teilnehmerstationen frei.

Drittens werden die Pausen detektiert, indem in den zeitkritischen Informationen eine Signalisierung über eine Unterbrechung der Übertragung der zeitkritischen Informationen enthalten ist, die von der Basisstation oder einer netzseitigen Einrichtung ausgewertet werden.

Anwendungen mit nicht-zeitkritischer Informationen sind beispielsweise eine Email, oder Internetdaten, für die nur eine niedriger Dienst-Güte (QoS, Quality of Service) benötigt wird. Solche Informationen können auch mit einer größeren Verzögerung übertragen werden.

Aufgrund der Anforderung signalisiert die Basisstation vorteilhafterweise einen Abbruch der nicht-zeitkritischen Informationen der jeweiligen weiteren Teilnehmerstation und die Vergabe der Übertragungsressource für die Übertragung der zeitkritischen Informationen. Die Signalisierung erfolgt beispielsweise gleichzeitig über einen zweiten Signalisierungskanal. So wird von der Basisstation die Verteilung der Übertragungsressourcen in Aufwärtsrichtung gesteuert, ohne einer Übertragung von zeitkritischen Informationen eine Übertragungsressource ständig exklusiv zuordnen zu müssen. Eine Koordination der Übertragungen der Aufwärtsrichtung wird daher von der Basisstation oder einer netzseitigen Einrichtung gesteuert.

In einer alternativen Ausgestaltung der Erfindung ist der zweite Teil der Subkanäle für Messungen von Ubertragungsbedingungen der Funkschnittstelle vorgesehen. Während einer logischen Verbindung werden temporär keine Informationen übertragen. Um dennoch Messungen der Übertragungsbedingungen der Funkschnittstelle während der Übertragungspausen zu gewährleisten, wird in den einer Teilnehmerstation exklusiv zugewiesenen Subkanälen des zweiten Teils ein Meßsignal als Signalisierung übertragen. Diese Signalisierung kann beispielsweise zyklisch oder auf Anforderung der Basisstation erfolgen. Die Aktualisierung der Messung ist nur in größeren Zeitabstanden, beispielsweise 2 Sekunden, nötig. Die exklusive Zuweisung des Subkanals erfolgt so nur für einen begrenzten Zeitraum, der periodisch in größeren Zeitabständen von der Basisstation gesteuert wird. So senden alternierend mehrere Teilnehmerstationen ein oder mehrere Meßsignale innerhalb eines in diesem Zeitschlitz jedoch exklusiv zugewiesenen Subkanals, so daß nur geringe Ressourcen verbraucht werden.

Vorteilhaft werden die Messungen der Übertragungsbedingungen zur Sendeleistungsregelung, Rahmensynchronistation und zur Ermittlung einer Vorhaltezeit (timing advance) ausgewertet.

So wird während langer Übertragungspausen innerhalb logischer Verbindungen die Sendeleistung, Rahmensynchronisation und Vorhaltezeit zyklisch aktualisiert und somit eine Kollision aufgrund veränderter Signallaufzeiten verhindert bzw. die Interferenz aufgrund nicht geregelter Sendeleistungen verringert.

Die Subkanäle des zweiten Teils werden vorteilhafterweise für mehrere unterschiedliche Signalisierungen und Messungen verwendet. So wird vorteilhaft die Messung der Übertragungsbedingungen mit der kollisionsfreien Anforderung kombiniert.

Im Folgenden wird die Erfindung anhand von Ausführungsbeispielen bezugnehmend auf zeichnerische Darstellungen näher erläutert.

Dabei zeigen
- FIG 1: ein Blockschaltbild eines Funk-Kommunikations-systems, insbesondere eines Mobilfunksystems,
- FIG 2: eine schematische Darstellung der Funkschnittstelle zwischen Basisstationen und Teilnehmerstationen, und
- FIG 3: eine schematische Darstellung des Ablaufs des erfindungsgemäßen Verfahrens.

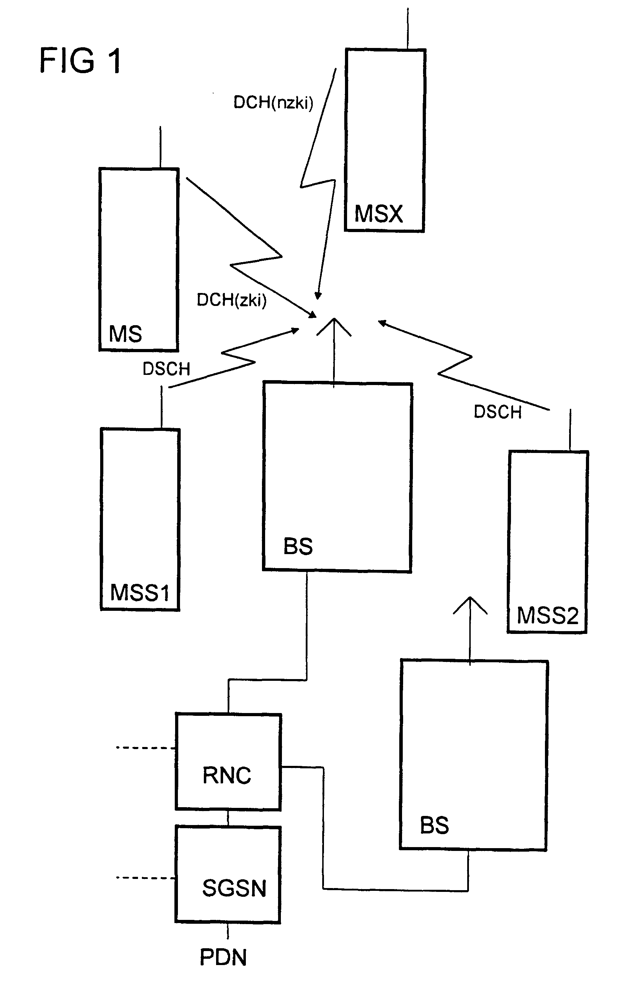

Das in FIG 1 dargestellte und beispielhaft als ein Mobilfunksystem ausgestaltete Funk-Kommunikationssystem besteht aus einer Vielzahl von Mobilvermittlungsstellen SGSN, die untereinander vernetzt sind bzw. den Zugang zu einem Festnetz PDN herstellen. Weiterhin sind diese Mobilvermittlungsstellen SGSN mit jeweils zumindest einer Einrichtung zur Zuteilung 5 funktechnischer Ressourcen RNC verbunden. Jede dieser Einrichtungen RNC ermöglicht wiederum eine Verbindung zu zumindest einer Basisstation BS.

Diese Basisstation BS ist eine Funkstation, die über eine Funkschnittstelle Kommunikationsverbindungen zu mobilen oder stationären Teilnehmerstationen MS, MSX, MSS1 und MSS2 aufbauen und signalisieren kann. Die Funktionalität dieser Struktur wird von dem erfindungsgemäßen Verfahren genutzt. Ein Einsatz in beispielsweise einem drahtlosen Teilnehmeranschlußsystem (Access-Network) ist dabei ebenso möglich.

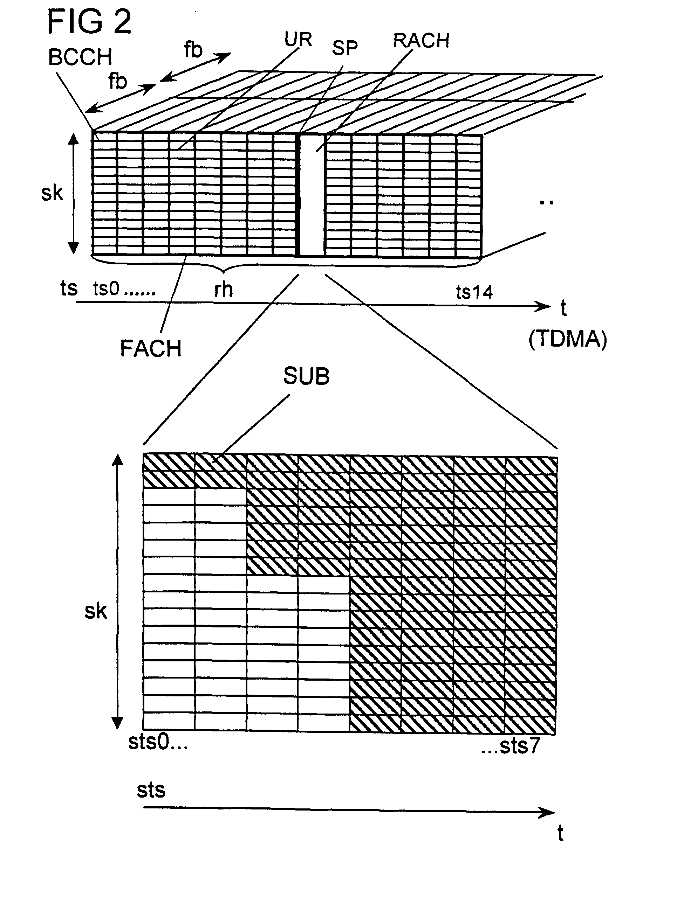

Von einer Teilnehmerstation MS zu einer Basisstation BS ist ein Übertragungskanal DCH in Aufwärtsrichtung zur unverzögerten Übertragung von zeitkritischen Informationen zki exklusiv zugeordnet. Dieser Übertragungskanal DCH kann aus einer oder mehreren Übertragungsressourcen UR bestehen, wie dies in Fig 2 genauer dargestellt ist. Dieser Übertragungskanal DCH ist für die Maximalwerte stark schwankender Datenraten ausgelegt. Besonders zeitkritische Anwendungen mit stark schwankenden Datenraten, die mit geringer Verzögerung übertragen werden müssen, wie beispielsweise Video-Übertragungen oder Sprach-übertragungen mit einer Unterbrechung der Übertragung während der Sprachpausen (VAD, Voice Activity Detection), benötigen für diese Dienste einen exklusiv zugeordneten Übertragungskanal DCH. In diesem Übertragungskanal DCH wird die Übertragung der zeitkritischen Informationen zki nicht durch die Übertragung von nicht-zeitkritischen Informationen nzki von weiteren Teilnehmerstationen MSX verzögert.

Gemeinsam genutzte Übertragungskanäle DSCH werden dagegen nicht exklusiv einer Übertragung zu mehreren Teilnehmerstationen MSS1 und MSS2 zugeordnet. Sie werden für nicht-zeitkritische Informationen nzki, beispielsweise verzögerte Übertragungen von Datenpaketen, von unterschiedlichen Teilnehmerstationen MSS1, MS2 genutzt. Für nicht-zeitkritische Informationen nzki, die in gemeinsam genutzten Übertragungskanälen übertragen werden, wird beispielsweise eine aus dem GPRS-System bekannte Signalisierung verwendet, wobei die wesentlich längeren Verzögerungen durch die Signalisierung für die nicht-zeitkritischen Informationen nzki in Kauf genommen werden. Für eine Übertragung von zeitkritischen Informationen zki ist die längere Verzögerung jedoch nicht hinnehmbar.

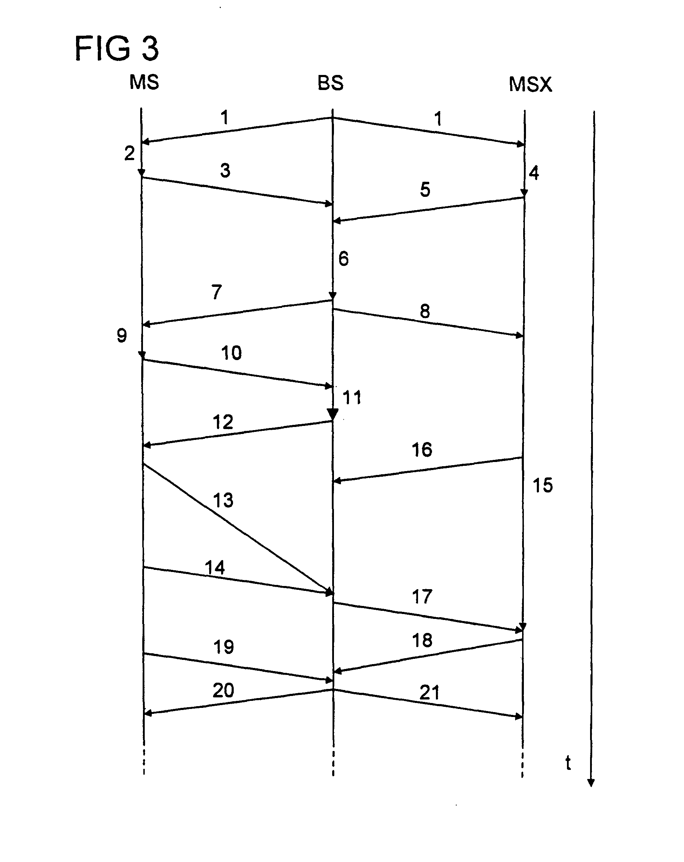

Erfindungsgemäß werden in den Pausen der Übertragung der zeitkritischen Informationen zki zusätzlich nicht-zeitkritische Informationen nzki weiterer Teilnehmerstationen MSX im selben Übertragungskanal DCH übertragen. Eine Abfolge des erfindungsgemäßen Verfahrens ist hierzu in FIG 3 dargestellt.

Eine beispielhafte Rahmenstruktur der Funkschnittstelle eines TDD-Übertragungsverfahrens ist aus der FIG 2 ersichtlich. Gemäß einer TDMA-Komponente ist eine Aufteilung eines breitbandigen Frequenzbandes fb, beispielsweise der Bandbreite von 5 MHz vorgesehen. Eine Übertragungsressource UR ist durch ein Frequenzband fb, einen Spreizkode sk und einen Zeitschlitz ts definiert. Die günstigste Separierung ist mit orthogonalen Spreizkodes möglich. Eine Übertragungsressource UR ist die kleinste Einheit, die einer Teilnehmerstation MS, MSX, MSS1 oder MSS2 zur Datenübertragung zuweisbar ist. Innerhalb eines breitbandigen Frequenzbandes fb werden die aufeinanderfolgenden Zeitschlitze ts nach einer Rahmenstruktur gegliedert. So werden 15 Zeitschlitze ts0 bis ts14 zu einem Rahmen rh zusammengefaßt.

Bei einer Nutzung eines TDD-Übertragungsverfahrens wird ein Teil der Zeitschlitze ts1 bis ts14 in Aufwärtsrichtung und ein Teil der Zeitschlitze ts0 bis ts14 in Abwärtsrichtung benutzt, wobei die Übertragung in Abwärtsrichtung beispielsweise vor der Übertragung in Aufwärtsrichtung erfolgt. Dazwischen liegt ein Umschaltzeitpunkt SP, der entsprechend dem jeweiligen Bedarf an Übertragungskanälen DCH, DSCH für die Auf- und Abwärtsrichtung flexibel positioniert wird.

Mit Channel-Pooling werden einer Kommunikationsverbindung jeweils ein oder mehrere Übertragungsressourcen UR zugewiesen.

Das Verfahren des Channel-Poolings wird vorteilhaft eingesetzt, um Kommunikationsverbindungen zu bzw. von Teilnehmerstationen MS, MSX mit unterschiedlichen Datenraten zu realisieren oder um auf einer Kommunikationsverbindung mehrere Dienste parallel zu betreiben. Hierzu werden mehrere Übertragungsressourcen UR zur Übertragung für eine Verbindung zusammengefaßt.

Innerhalb des Rahmens rh sind beispielhaft ein erster Signalisierungskanal RACH in Aufwärtsrichtung, der allgemeine Signalisierungskanal BCCH, und ein zweiter Signalisierungskanal FACH in Abwärtsrichtung dargestellt. Während der allgemeine Signalisierungskanal BCCH und der zweite Signalisierungskanal FACH nur eine Übertragungsressource UR benötigen, umfaßt der erste Signalisierungskanal RACH die Übertragungsressourcen UR eines ganzen Zeitschlitzes ts.

Unterhalb des Rahmens rh ist die Struktur des ersten Signalisierungskanals RACH dargestellt. Der erste Signalisierungskanal RACH enthält aufeinanderfolgende Subkanäle SUB, die durch Spreizkode sk und Sendezeitpunkt sts innerhalb des Zeitschlitzes ts definiert sind. Ein erster Teil der Subkanäle SUB, in der FIG 2 nicht-schraffiert dargestellt, wird von den Teilnehmerstationen MS, MSX, MSS1 und MSS2 für einen wahlfreien Vielfachzugriff genutzt. Zusätzlich wird ein zweiter Teil der Subkanäle SUB, in der FIG 2 schraffiert dargestellt, Teilnehmerstationen MS zur Signalisierung, beispielsweise der Signalisierung der Übertragung von zeitkritischen Informationen zki, innerhalb bestehender logischer Verbindungen exklusiv zugewiesen.

Die Aufteilung der Subkanäle SUB in den ersten und zweiten Teil wird durch die Basisstation BS konfiguriert und über den allgemeinen Signalisierungskanal BCCH den Teilnehmerstationen MS, MSX, MSS1 und MSS2 signalisiert. Beispielsweise, in der FIG 2 nicht dargestellt, werden alle Sendezeitpunkte sts eines Spreizkodes sk einem Teil der Subkanäle SUB zugeordnet.

Alternativ werden alle Spreizkodes sk eines Sendezeitpunktes sts einem Teil der Subkanäle zugeordnet. In FIG 2 ist eine freie Aufteilung durch die Basisstation BS dargestellt, wie sie beispielsweise abhängig von der Anzahl der wahlfreien Vielfachzugriffe konfiguriert wird.

In FIG 3 ist der Ablauf des erfindungsgemäßen Verfahrens zwischen einer Basisstation BS und zwei Teilnehmerstationen MS und MSX schematisch dargestellt. In diesem Beispiel sollen von der Teilnehmerstation MS zeitkritische Informationen zki an die Basisstation BS übertragen werden. Während die Teilnehmerstation MSX lediglich nicht-zeitkritische Informationen nzki an die Basisstation BS übertragen soll. Der Ablauf erfolgt entlang einer Zeitachse t.

In Schritt 1 werden über den allgemeinen Signalisierungskanal BCCH Signalisierungsinformationen von der Basisstation BS an die Teilnehmerstationen MS und MSX übertragen. Ein Teil der Signalisierungsinformationen ist dabei die Aufteilung der Subkanäle SUB des ersten Signalisierungskanals RACH in einen ersten Teil für einen wahlfreien Vielfachzugriff und einen zweiten Teil zur Signalisierung innerhalb bestehender logischer Verbindungen.

Zum Aufbau einer logischen Verbindung wertet im Schritt 2 die Teilnehmerstation MS die Signalisierungsinformationen aus. Der Nutzer fordert mit der Teilnehmerstation MS eine oder mehrere Übertragungsressourcen UR für die logische Verbindung zur Übertragung von zeitkritischen Informationen zki an. Hierzu sendet die Teilnehmerstation MS im Schritt 3 mit einem wahlfreien Vielfachzugriffsverfahren im ersten Teil der Subkanäle SUB des ersten Signalisierungskanals RACH eine Signalisierung zur Anforderung der Übertragungsressourcen UR für die zeitkritischen Informationen zki an die Basisstation BS.

Zum Aufbau einer weiteren logischen Verbindung wertet im Schritt 4 die Teilnehmerstation MSX die Signalisierungsinformationen aus. Der Nutzer fordert mit der Teilnehmerstation MSX mindestens die weitere logische Verbindung zur Übertragung von nicht-zeitkritischen Informationen nzki an. Hierzu sendet die Teilnehmerstation MSX im Schritt 5 mit einem wahlfreien Vielfachzugriffsverfahren im ersten Teil der Subkanäle SUB des ersten Signalisierungskanals RACH eine Signalisierung zur Anforderung der Verbindung für die nicht-zeitkritischen Informationen nzki an die Basisstation BS.

In Schritt 6 wertet die Basisstation BS die im ersten Signalisierungskanal RACH empfangenen Signalisierungen aus. Zu den beiden Teilnehmerstationen MS und MSX werden logische Verbindungen aufgebaut und signalisiert. Zum Aufbau der Verbindungen sind weitere Signalisierungen vorteilhaft, beispielsweise zur Identifizierung oder Authentifizierung, die in der FIG 3 zur Vereinfachung nicht dargestellt sind.

Der Teilnehmerstation MS wird beispielsweise eine Übertragungsressource UR innerhalb der logischen Verbindung exklusiv zugewiesen. Zudem wird der Teilnehmerstation MS ein Subkanal SUB des zweiten Teils zu der kollisionsfreien Signalisierung von Anforderungen von der Übertragungsressource UR für die Übertragung der zeitkritischen Informationen zki exklusiv zugewiesen. Ein weiterer exklusiv zugewiesener Subkanal SUB des zweiten Teils ist für Messungen von Übertragungsbedingungen der Funkschnittstelle vorgesehen.

In Schritt 7 werden die Zuweisungen der Teilnehmerstation MS signalisiert. In Schritt 8 werden die Zuweisungen der Teilnehmerstation MSX, beispielsweise im zweiten Signalisierungskanal FACH, signalisiert. Die Teilnehmerstation MSX geht daraufhin in Wartestellung. Zuvor wird in Schritt 6 der Teilnehmerstation MSX dieselbe Übertragungsressource UR innerhalb einer weiteren logischen Verbindung für die Übertragung der nicht-zeitkritischen Informationen nzki zugewiesen. Zudem wird der Teilnehmerstation MSX ein Subkanal SUB des zweiten Teils für Messungen von Übertragungsbedingungen der Funk-schnittstelle zugewiesen. Diese Subkanäle SUB zur Messung für beide Teilnehmerstation MS und MSX werden im selben Spreizkode sk und Sendezeitpunkt sts jedoch in unterschiedlichen Rahmen alternierend übertragen.

In Schritt 9 liegen Daten zur Übertragung in der Teilnehmerstation MS an und im Schritt 10 sendet die Teilnehmerstation MS im Subkanal SUB des ersten Teils im folgenden fortlaufend die Anforderung der Übertragungsressource UR an die Basisstation BS. Diese gibt im Schritt 11 den Übertragungskanal DCH frei und sendet im Schritt 12 die Kanalfreigabe im zweiten Signalisierungskanal FACH an die Teilnehmerstation MS.

Im Schritt 13 sendet die Teilnehmerstation MS nun so lange die zeitkritischen Informationen zki an die Basisstation BS bis zu einer Pause, d.h. bis keine zeitkritischen Informationen zki zur Übertragung vorliegen, so daß ab Schritt 14 keine Signalisierung im Subkanal SUB des ersten Teils von der Teilnehmerstation MS zur Anforderung der Übertragungsressource UR mehr gesendet wird.

Während des beschriebenen Zeitraumes der Schritte 9 bis 14 wartet die weitere Teilnehmerstation MSX auf die Möglichkeit einer Übertragung der nicht-zeitkritischen Informationen nzki. Die Informationen werden zu diesem Zweck in Schritt 15 in einer Warteschlange zwischengespeichert. Während des Zeitraumes sendet die weitere Teilnehmerstation MSX einmal oder mehrmals Meßsignale im Subkanal SUB im Schritt 16 an die Basisstation BS.

Mit der Auswertung der in Schritt 14 signalisierten Pause der Übertragung der zeitkritischen Informationen zki, sendet die Basisstation BS im Schritt 17 im zweiten Signalisierungskanal FACH eine Signalisierung zur Freigabe der Übertragungsressource UR für die nicht-zeitkritischen Informationen nzki an die weitere Teilnehmerstation MSX. Diese sendet nun im Schritt 18 die Informationen nzki an die Basisstation BS.

In Schritt 18 wird besonders vorteilhaft die Erfindung in Verbindung mit einem Verfahren (ARQ) zum wiederholten Senden fehlerhaft empfangener Daten kombiniert. Gestört empfangene Daten werden erkannt, der Sendeseite signalisiert und von dieser wiederholt übertragen werden. Insbesondere für nicht-zeitkritische Informationen nzki, beispielsweise Paketdaten einer Email, wird so ein aufgrund des Endes der Pause der Übertragung der zeitkritischen Informationen zki nur unvollständig übertragenes Datenpaket der nicht-zeitkritischen Informationen nzki beispielsweise innerhalb der nächsten Pause erneut übertragen.

Ein Ende der Pause wird in Schritt 19 im exklusiv zugewiesenen Subkanal SUB des zweiten Teils durch die Teilnehmerstation MS signalisiert. Die Basisstation BS gibt daraufhin im Schritt 20 gleichzeitig die Übertragungsressource UR für die Übertragung der zeitkritischen Informationen zki frei und signalisiert im Schritt 21 der weiteren Teilnehmerstation MSX die Sperrung der Übertragungsressource UR für die Übertragung der nicht-zeitkritischen Informationen nzki.

## Patentansprüche

1. Verfahren zum Zuweisen von Übertragungsressourcen (UR) der Aufwärtsrichtung einer Funkschnittstelle von Teilnehmerstationen (MS,MSX) zu einer Basisstation (BS) eines Kommunikationssystems,
wobei für die Funkschnittstelle mehrere Zeitschlitze (ts) in einem Rahmen (rh) zusammengefaßt sind,
bei dem die Übertragungsressourcen (UR), die durch ein Frequenzband (fb), einen Spreizkode (sk) und einen Zeitschlitz (ts) definiert sind, jeweils einer Teilnehmerstation (MS) zur Datenübertragung zuweisbar sind,
innerhalb des Rahmens (rh) ein erster, durch die Übertragungsressourcen (UR) eines Zeitschlitzes (ts) gebildeter Signalisierungskanal (RACH) mehrere Subkanäle (SUB) enthält, die durch Spreizkode (sk) der Übertragungsressource (UR) und Sendezeitpunkt (sts) innerhalb des Zeitschlitzes (ts) definiert sind,
ein erster Teil der Subkanäle (SUB) von den Teilnehmerstationen (MS,MSX,MSS1,MSS2) für einen wahlfreien Vielfachzugriff genutzt wird, charakterisiert dadurch, class zusätzlich ein zweiter Teil der Subkanäle (SUB) Teilnehmerstationen (MS) zur Signalisierung innerhalb bestehender logischer Pahetdatenverbindungen exklusiv zugewiesen wird.

2. Verfahren nach Anspruch 1, bei dem
die Aufteilung der Subkanäle (SUB) in den ersten und zweiten Teil durch die Basisstation (BS) konfiguriert und über einen allgemeinen Signalisierungskanal (BCCH) den Teilnehmerstationen (MS,MSX,MSS1,MSS2) signalisiert wird.

3. Verfahren nach Anspruch 2, bei dem
die Aufteilung anhand der Anzahl der wahlfreien Vielfachzugriffe konfiguriert wird.

4. Verfahren nach Anspruch 2, bei dem
die Aufteilung anhand der Anzahl der logischen Pahetdatenverbindungen für eine Übertragung von zeitkritischen Informationen (zki) konfiguriert wird.

5. Verfahren nach einem der Ansprüche 2 bis 4, bei dem
die Aufteilung zyklisch konfiguriert wird.

6. Verfahren nach einem der vorhergehenden Ansprüche, bei dem zumindest ein Subkanal (SUB) des zweiten Teils zu der kollisionsfreien Signalisierung von Anforderungen der Teilnehmerstationen (MS) von Übertragungsressourcen (UR) für eine Übertragung von zeitkritischen Informationen (zki) vorgesehen ist.

7. Verfahren nach einem der Ansprüche 1 bis 5, bei dem zumindest ein Subkanal (SUB) des zweiten Teils für Messungen von Übertragungsbedingungen der Funkschnittstelle vorgesehen ist.

8. Verfahren nach Anspruch 7, bei dem
die Messungen der Übertragungsbedingungen zur Sendeleistungsregelung ausgewertet werden.

9. Verfahren nach einem der Ansprüche 7 oder 8, bei dem
die Messungen der Übertragungsbedingungen zur Rahmensynchronisation ausgewertet werden.

10. Verfahren nach einem der Ansprüche 7 oder 8, bei dem
die Messungen der Übertragungsbedingungen zur Ermittlung einer Vorhaltezeit ausgewertet werden.

11. Verfahren nach Anspruch 6, bei dem
während Pausen der von der Teilnehmerstation (MS) signalisierten Übertragung von zeitkritischen Informationen (zki) eine exklusive Zuweisung einer Übertragungsressource (UR) zur jeweiligen Teilnehmerstation (MS) temporär aufgehoben wird, und
in der Übertragungsressource (UR) nicht-zeitkritische Informationen (nzki) von weiteren Teilnehmerstationen (MSX) innerhalb einer logischen Pahetdatenverbindung zur Basisstation (BS) übertragen werden.

12. Verfahren nach Anspruch 11, bei dem
aufgrund der Anforderung die Basisstation (BS) einen Abbruch der Übertragung der nicht-zeitkritischen Informationen (nzki) der jeweiligen weiteren Teilnehmerstation (MSX) und eine Vergabe der Übertragungsressource (UR) für die Übertragung der zeitkritischen Informationen (zki) über einen zweiten Signalisierungskanal (FACH) signalisiert.

## Claims

1. Method for allocating transmission resources (UR) to the uplink in a radio interface between subscriber stations (MS,MSX) and a base station (BS) in a communications system,
where a plurality of time slots (ts) are combined in one frame (rh) for the radio interface,
in which the transmission resources (UR), defined by a frequency band (fb), a spreading code (sk) and a time slot (ts), can respectivey be allocated to a subscriber station (MS) for data transmission,
a first signalling channel (RACH), formed by the transmission resources (UR) of a time slot (ts), within the frame (rh) contains a plurality of subchannels (SUB) which are defined by spreading code (sk) for the transmission resource (UR) and transmission time (sts) within the time slot (ts),
a first portion of the subchannels (SUB) is used by the subscriber stations (MS,MSX,MSS1,MSS2) for random multiple access, **characterized in that**
additionally a second portion of the subchannels (SUB) is exclusively allocated to subscriber. stations (MS) for the purposes of signalling within existing logical packet data connections.

2. Method according to Claim 1, in which the split of the subchannels (SUB) into the first and second portions is configured by the base station (BS) and is signalled to the subscriber stations (MS,MSX,MSS1,MSS2) via a general signalling channel (BCCH).

3. Method according to Claim 2, in which the split is configured on the basis of the number of random multiple access operations.

4. Method according to Claim 2, in which the split is configured on the basis of the number of logical packet data connections for transmitting time-critical information (zki).

5. Method according to one of Claims 2 to 4, in which the split is configured cyclically.

6. Method according to one of the preceding claims, in which at least one subchannel (SUB) of the second portion is provided for collision-free signalling of requests by the subscriber stations (MS) for transmission resources (UR) for transmitting time-critical information (zki).

7. Method according to one of Claims 1 to 5, in which at least one subchannel (SUB) of the second portion is provided for measurements of transmission conditions in the radio interface.

8. Method according to Claim 7, in which the measurements of the transmission conditions are evaluated for the purposes of transmitted power regulation.

9. Method according to one of Claims 7 or 8, in which the measurements of the transmission conditions are evaluated for the purposes of frame synchronization.

10. Method according to one of Claims 7 or 8, in which the measurements of the transmission conditions are evaluated for the purposes of ascertaining a timing advance.

11. Method according to Claim 6, in which an exclusive allocation of a transmission resource (UR) to the respective subscriber station (MS) is temporarily canceled during breaks in the transmission of time-critical information (zki) signalled by the subscriber station (MS), and the transmission resource (UR) is used to transmit non-time-critical information (nzki) from other subscriber stations (MSX) to the base station (BS) within a logical packet data connection.

12. Method according to Claim 11, in which the base station (BS) takes the request as a basis for signalling termination of the transmission of the non-time-critical information (nzki) from the respective other subscriber station (MSX) and allocation of the transmission resource (UR) for transmitting the time-critical information (zki), using a second signalling channel (FACH).

## Revendications

1. Procédé d'affectation de ressources de transmission (UR) de la direction ascendante d'une interface radio de stations de participants (MS, MSX) vers une station de base (BS) d'un système de communication, plusieurs intervalles de temps (ts) étant réunis en un cadre (rh) pour ladite interface radio, les ressources de transmission (UR) définies par une bande de fréquence (fb), un code d'étalement (sk) et un intervalle de temps (ts) pouvant être affectées chacune à une station de participant (MS) pour la transmission de données, un premier canal de signalisation (RACH) formé par les ressources de transmission (UR) d'un intervalle de temps (ts) contenant plusieurs sous-canaux (SUB) à l'intérieur du cadre (rh), lesquels sont définis par le code d'étalement (sk) de la ressource de transmission (UR) et l'instant d'émission (sts) à l'intérieur de l'intervalle de temps (ts) et une première partie desdits sous-canaux (SUB) étant utilisée par les stations de participants (MS, MSX, MSS1, MSS2) pour un accès multiple direct, **caractérisé en ce qu'**additionnellement une deuxième partie des sous-canaux (SUB) est exclusivement affectée à des stations de participants (MS) pour la signalisation à l'intérieur de liaisons logiques existantes de données en paquets.

2. Procédé selon la revendication 1, dans lequel la répartition des sous-canaux (SUB) en la première et la deuxième partie est configurée par la station de base (BS) et est signalée aux stations de participants (MSS, MSX, MSS1, MSS2) par l'intermédiaire d'un canal général de signalisation (BCCH).

3. Procédé selon la revendication 2, dans lequel la répartition est configurée à l'aide du nombre des accès multiples directs.

4. Procédé selon la revendication 2, dans lequel la répartition est configurée à l'aide du nombre des liaisons de données en paquets pour une transmission d'informations temporellement critiques (zki).

5. Procédé selon l'une des revendications 2 à 4, dans lequel la répartition est configurée cycliquement.

6. Procédé selon l'une des revendications précédentes, dans lequel au moins un sous-canal (SUB) de la deuxième partie est prévu pour la signalisation sans collision de requêtes de stations de participants (MS) tendant à obtenir des ressources de transmission (UR) pour une transmission d'informations temporellement critiques (zki).

7. Procédé selon l'une des revendications 1 à 5, dans lequel au moins un sous-canal (SUB) de la deuxième partie est prévu pour des mesures de conditions de transmission de l'interface radio.

8. Procédé selon la revendication 7, dans lequel les mesures des conditions de transmission sont analysées pour régler la puissance d'émission.

9. Procédé selon l'une des revendications 7 ou 8, dans lequel les mesures des conditions de transmission sont analysées pour la synchronisation des cadres.

10. Procédé selon l'une des revendications 7 ou 8, dans lequel les mesures des conditions de transmission sont analysées pour déterminer une avance de temps.

11. Procédé selon la revendication 6, dans lequel une affectation exclusive d'une ressource de transmission (UR) à chaque station de participant (MS) est temporairement annulée pendant les pauses de la transmission d'informations temporellement critiques (zki) signalée par la station du participant (MS) et des informations temporellement non critiques (nzki) sont transmises dans la ressource de transmission (UR) d'autres stations de participants (MSX) vers la station de base (BS) à l'intérieur d'une liaison logique de données en paquets.

12. Procédé selon la revendication 11, dans lequel, suite à la requête, la station de base (BS) signale un arrêt de la transmission des informations temporellement non critiques (nzki) à chaque autre station de participant (MSX) et l'attribution de la ressource de transmission (UR) pour la transmission des informations temporellement critiques (zki) par l'intermédiaire d'un deuxième canal de signalisation (FACH).
